# EUROPEAN PATENT SPECIFICATION

(11) **EP 0 341 992 B1**
(45) Date of publication and mention of the grant of the patent: **27.12.1995**
(21) Application number: 89304708.4
(22) Date of filing: 10.05.1989
(51) Int. Cl.: B65D 41/18, B29C 45/44

(54) **Method and apparatus for manufacture of container closures**
Verfahren und Gerät zur Herstellung von Behälterverschlüssen
Méthode et appareil pour produire des fermtures pour récipients

(30) Priority: 11.05.1988 US 193260; 21.11.1988 US 273598; 21.11.1988 US 273599
(43) Date of publication of application: 15.11.1989
(73) Proprietor: Towns, Edward J., Dr., Matthews North Carolina 28105 (US); Brown, Edward M., Livingston New Jersey 07039 (US)
(72) Inventor: Towns, Edward J., Dr., Matthews North Carolina 28105 (US); Brown, Edward M., Livingston New Jersey 07039 (US)
(74) Representative: Pluckrose, Anthony William

(56) References cited:
- EP-A- 0 004 500
- WO-A-86/01179
- WO-A-88/00559
- BE-A- 796 892
- DE-C- 878 606
- DE-C- 1 003 621
- FR-A- 1 591 041
- FR-A- 2 314 872
- GB-A- 2 022 063

## Description

This invention relates generally to the making of closures for containers and pertains more particularly to the manufacture of improved closures including closures with tamper indication facility.

A quite common container closure is referred to as a "crown" closure, by reason of its analogous appearance to the tiara or crown of royalty, being of frusto-conical shape and having a metal or plastic closure member with a top panel, a skirt depending from the top panel with exterior undulated surface and interior sealing means adapted for sealing engagement with the upper surface of the neck of a container.

The merits of such crown closures, and other related closures of simple structure such as straight skirt line closures which are essentially cylindrical in shape, are dependent largely upon their ability to maintain container pressurization existing at the time of their initial application to the container, and to withstand increased internal pressures in the container which, if in excess of the sealing retention capability of the closure, can give rise to leakage of pressurization of contained contents or actual liftoff.

From applicants' viewpoint, presently known crown closures do exhibit levels of sealing of desired magnitude. However, being of metal, they are prone to rust and present an exterior with a sharp edge which can cut the hands. Also, they are not tamper-evident and can be removed and replaced without evidencing the same. A crimping operation is needed in initial application to a container to effect sealing.

Certain synthetic molded bottle closures are known which have internal beads co-operative with circumferential indentations on bottle necks. The greater radially interior extent of such bead, the greater is the capacity for pressure retention. However, in the case of synthetic molded closures, the radially interior extent of such beads has been limited such that the molded closure may be removed or stripped from its forming core without damage to the bead and without need for collapsible forming cores, use of which entails increased expense and complexity in the making apparatus. It is clearly desirable to provide practice and structure which can increase the radially interior extent of sealing beads to thereby maximize sealing and pressure retention capability.

As above alluded to, tamper indication facility in simple closures is desirable. Heretofore known crown and related closures of simple construction do not exhibit such facility.

Another prior art commercial closure is of the type having so-called "rear locking tabs" and a so-called "front locking tab", the three tabs being spaced mutually about the inner periphery of the closure skirt.

Such commercial closure is time-consuming to manufacture, involving the plural and sequential steps of effecting the release of the rear locking tabs from a forming core by displaceable pins and rotation or rocking of the closure relative to the forming core to release the front locking tab therefrom.

Structure of the heretofore known locking tab type closure comprises a closure top panel integrally formed with a skirt depending downwardly from the top panel, the skirt interior being fully cylindrical in first part adjacent the top panel, i.e., without sealing retention beads or the like. A second skirt interior part has the locking tabs formed thereon in configuration shown and discussed below. While the tabs are mutually spaced, the art has also seen a so-called hold-down bead perimetrically supplemental to the tabs at like elevation. In use of this type of closure, to open a container closed thereby, the closure is rotated until the tabs are in alignment with corresponding release recesses formed on the container neck. The closure may then be lifted off of the container. The hold-down ring prevents the closure from self-release when such alignment exists, requiring some lifting force on the closure for removal and thus constituting a form of child-proofing of the closure.

In US 4346811 a container closure having a planar top surface and a cylindrical skirt is described as well as a method of and apparatus for making the closure. The closure is formed on a forming core and a stripper ring is used which encircles the forming core and has a flat upper surface which defines a corresponding flat lower surface on the container closure. An ejector rod is provided which engages the interior planar surface of the container closure. The stripper ring and ejector rod and moved vertically upwardly relative to the forming core to eject the formed closure. All of the radial force needed to effect release of the beads of the closure from corresponding indentations of the forming core results from interaction between the beads and the core.

The International application PCT/US87/01639 (as published under number WO88/00559) describes a closure for a container of the type typically used for carbonated beverages. The closure is designed to complete a beverage container and is not a removeable closure like the closure of US 4346811. The closure seals to the beverage can by a clamping action of an inner and outer rim. The closure is formed by a forming core by moulding and is formed with a spherical top wall. During forming the inner and outer rims are radially flared from each other. The lower surface of the outer rim is defined by a tapered stripper ring. An ejector sleeve is provided in contact with the inner spherical top surface of the closure. Vertical movement of the ejector sleeve and stripper ring relative to the forming core releases the closure with the bridging wall joining the inner and outer rims to allow bending of the rims away from each other.

Neither the system of US 4346811 nor the system of WO88/00559 solves the problem of providing a quick manufacturing process for producing closures with locking tabs.

The present invention provides a method for making a removable container having a planar top panel and a cylindrical skirt depending from the top panel comprising the steps as defined in Claim 1.

Preferably the first circumferential indentation of the forming core used is located between the indentations which define the locking tabs and the portion of the exterior surface of the forming core which defines the top panel undersurface, the first circumferential indentation being coactive with the bead formed therein to generate an outward radial force on the formed closure during displacement of the stripper plate relative to the forming core thereby assisting release of the locking tabs from the indentations which define them.

In the method a forming core is used which has additional indentations which define locking tabs of the closure, these locking tabs being released from the forming core on relative displacement between the stripper plate and the forming core, the indentation defining the bead being preferably coactive with the forming core bead in effecting the radial displacement of the formed closure.

The radially outward force exerted on the cylindrical skirt by the stripper plate effects release of the bead of the skirt from the first indentation on the forming core.

Preferably the forming core used has a second circumferential indentation spaced apart from the first circumferential indentation further away from the portion of the exterior surface of the forming core which defines the top panel, the second indentation defining a hold-down ring.

Preferably, the forming core has a continuous surface which defines the whole of the interior surface of the planar top panel.

The stripper plate can be used alone to release the formed closure and no ejector rod or ring in contact with the planar surface of the closure is necessary to effect release.

Preferably the method includes the step of displacing the forming core relative to the stripper plate to strip the formed closure. Additionally or alternatively the forming core is displaced relative to the stripper plate to occasion radially outwardly directed forces on the formed closure, the movement occasioning such forces until the bead of the closure is released from the forming core indentation.

Preferably the stripper plate used in the method has a conical portion defining the second interior surface of the closure and the forming core has a cylindrical portion located in a cylindrical bore through the stripper plate. In such an instance a stripper plate is preferably used which encircles the forming core and the conical surface of the stripper plate is contiguous with the forming core exterior surface.

In the method a forming core can be used which has an exterior surface which includes a portion for forming a sealing member, integral with the closure. A forming core is preferably used which has an exterior surface which includes a conical recess at one end of the forming core whereby a conical sealing member is formed integral with the closure, which conical sealing member extends downwardly from the top panel flaring radially outwardly with increasing distance from the top panel.

In another variation of the method a forming core is used which has an exterior surface which includes a recess at one end of the forming core whereby an annular surface of the closure is formed with a preselected radius of curvature as a sealing member which can act by forming two sealing loci when brought into abutment with a container surface.

The present invention also provides apparatus as defined in Claim 11 for use in the above described method.

Preferably the forming core has a first circumferential indentation for defining a bead located between the portion of the forming core which defines the top panel undersurface and the indentations which define the locking tabs.

Preferably the forming core has a second circumferential indentation spaced apart from the first circumferential indentation further away from the portion of the forming force which defines the top panel undersurface, the second circumferential indentation defining a hold-down ring.

Preferably the upper portion of the forming core is a continuous surface which defines all of the interior top panel undersurface of the closure. This makes the apparatus simpler than the prior art apparatus in not having an ejector rod or ring in contact with the inner surface of the closure and the forming core defines the entire interior planar surface.

Preferably means are provided to move the forming core relative to the stripper plate to strip the formed closure from the forming core.

Preferably the upper portion of the stripper plate is conical and defines a second interior surface of the closure which comprises a cone which is increasingly outwardly radially flared along its length.

Preferably in the apparatus the upper portion of the forming core defines the first interior surface of the closure with an annular surface spaced below the top panel undersurface.

The invention will be further understood from the ensuing detailed description of preferred embodiments and practices and from the drawings wherein like reference numerals identify like parts and components throughout.
Figure 1 is a top plan elevation of a closure made by a method according to the invention,
Figure 2 is a front elevation of the Figure 1 closure.
Figure 3 is a full sectional view of the Figure 1 closure as would be seen from plane III-III of Figure 2.
Figure 4 is a partial sectional elevation of the Figure 1 closure as would be seen from plane IV-IV of Figure 1.
Figure 5 is a partial sectional elevation of the Figure 1 closure as would be seen from plane V-V of Figure 1.
Figure 6 is a partial sectional elevation of the Figure 1 closure as would be seen from plane VI-VI of Figure 1.
Figure 7 schematically illustrates closure making apparatus of the invention in a first stage.
Figure 8 schematically illustrates closure making apparatus of the invention in a second stage.
Figure 9 is a schematic illustration of a second embodiment of closure,
Figure 10 is a schematic illustration showing how the closure making apparatus of figures 7 and 8 could be modified to include an additional feature.

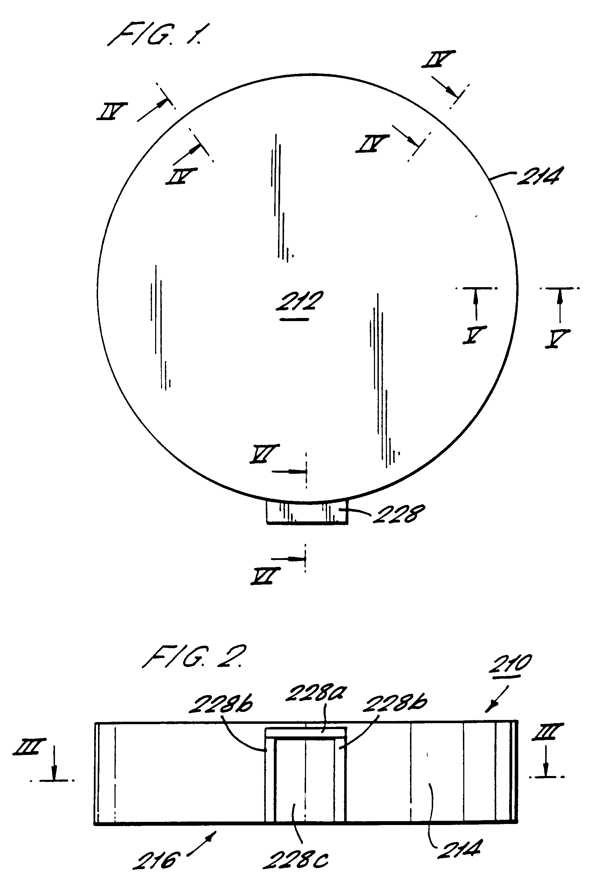

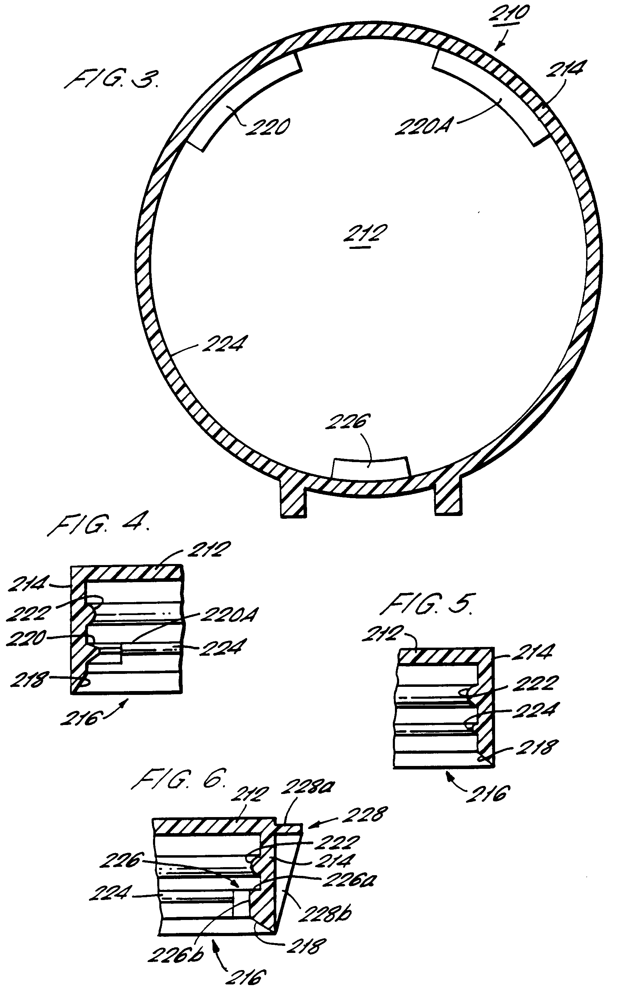

Referring to Figures 1-7, a closure 210 manufactured to a method according to the invention comprises a cylindrical molded unitary member defining a top panel 212 and a skirt 214 depending from the top panel to an open end 216 and is releasably securable to a container for closing the same.

Skirt 214 is interiorly tapered at open end 216, such tapered surface 218 ending in a first circumference radially of the central axis of the cylindrical closure and having a lower end preferably flush with the bottom of the closure.

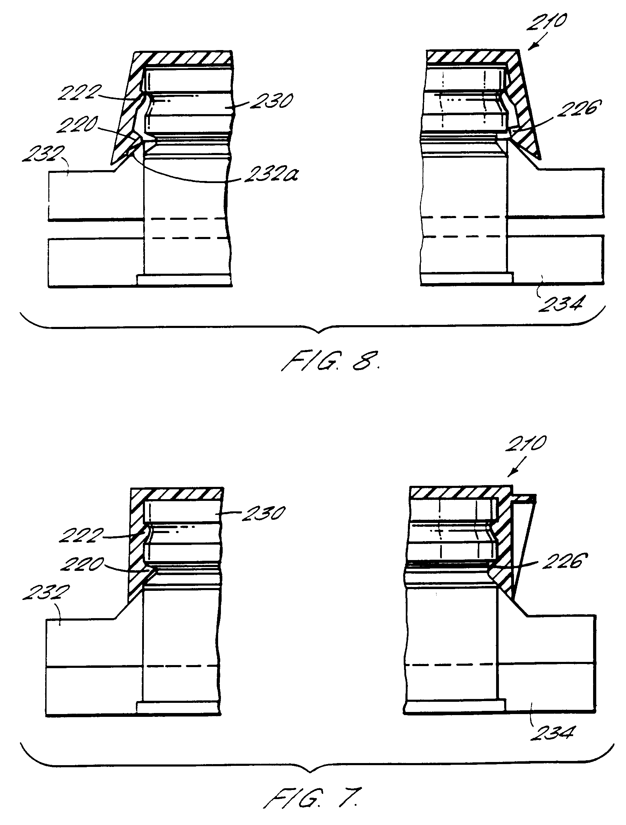

Skirt 214 further defines rear locking tabs 220 and 220a, which are of identical, generally triangular configuration. The rear locking tabs are mutually spaced about the interior periphery of closure 210 and each extends arcwise to the extents seen in Figure 3.

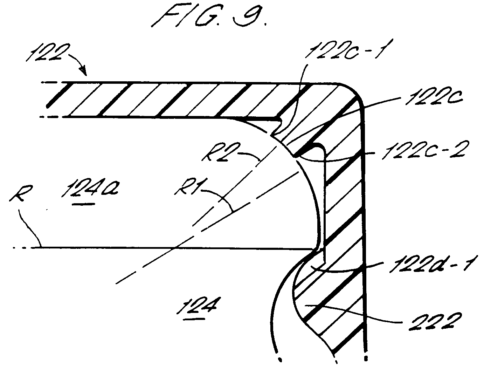

As is seen in Figures 4-7, a bead 222, not present in heretobefore known locking tab type closures, extends radially inwardly of skirt 214 at a location upwardly of the locking tabs and below the undersurface of top panel 212. Bead 222 is preferably perimetrically continuous as shown and may extend to a second circumference further from the central closure axis than such first circumference above noted.

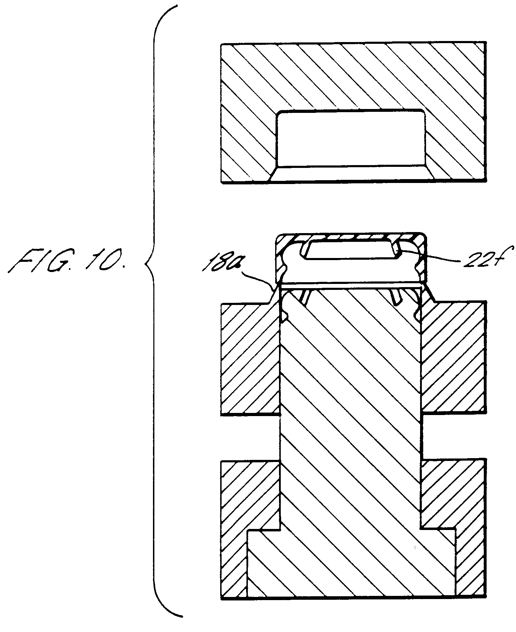

Hold-down ring 224 is seen in each of Figures 5-7 as being colocated vertically with the locking tabs and perimetrically supplemental therewith to avert closure self-li toff as above alluded to.

In Figure 6, the configuration of front locking tab 226 is seen to include an upper surface 226a generally orthogonal to skirt 214 and a successive generally vertical surface 226b leading to tapered surface 218. The arrangement of closure removal tab 228 is best seen in Figure 1 and Figure 6 as comprising a radially projecting top panel 228a and side panels 228b tapering therefrom to the closure bottom, a finger recess 228c existing beneath the tab top panel and the side panels.

Turning now to Figure 7, closure 210 is shown formed on apparatus according to the invention which comprises forming core 230 and stripper plate 232, the latter having a central opening through which the forming core is movable and having tapered upper portion 232a (see Figure 8), which forms the tapered closure surface 218 above discussed. The showing is schematic, intended to depict core portions leftwardly for forming locking tabs 220 and 220a and rightwardly for forming tab 226. The upper molding housing is omitted. Same would have interior surface conforming to the exterior surface of the closure, inclusive of structure for forming closure opening tab 228. Core position control plate 234 is disposed adjacent stripper plate 232 in Figure 7 for closure forming.

In Figure 8 following settling of the formed closure material and upward displacement of the upper molding housing to fully expose the formed closure, stripper plate 232 is advanced upwardly with respect to core position control plate 234 and the formed closure is radially expanded by forces of stripper plate tapered upper portion 232a, initially to displace locking tabs 220 and 226 from their forming core recesses, with the formed closure then being retained with the forming core by bead 222. Continued upward movement of stripper plate 232 results in escape of bead 222 from its core forming recess.

Subsequent downward movement of core position control plate 234 results in stripping of the formed closure therefrom. The apparatus of Figures 7 and 8 is preferably used in disposition inverted from that shown, such that the strapped formed closure member drops by gravity onto a collection device upon such stripping from the forming core.

While in the particularly illustrated preferred practice, the stripper plate is configured with a conical outer surface to define an interior taper as the closure second interior surface, contiguous with the closure first interior surface otherwise formed by the forming core 212, other configurations will now be evident to those skilled in the art, given applicants' teaching herein. Likewise, the configurations of the locking tabs and the stripping retention bead 222 may be modified from those particularly shown and discussed. Various other changes in configuration and modifications in practice are within the scope of the invention.

Figure 9 shows how a closure of the invention can be modified to include a sealing member interiorly thereof, such as is indicated in preferred form at 122c. The forming core of the apparatus would include a recess in its upper surface for the purpose of forming such sealing member. As illustrated, sealing member 122c comprises an annular surface following a preselected radius, to define upper and lower annular sealing surface loci, 122c-1 and 122c-2.

Sealing member 122c provides enhanced sealing characteristics, sealing without dependence on container surfaces which are not under industry tolerance standards, non-usage of a sealing member dependent from the closure top panel and adapted to enter the container and seal on the interior surface of the container not controlled to any industry standard, and effective venting in pressurized containers to avoid lift-off of closures due to increases in container interior pressure and to provide for progressive venting at the point of container opening.

The function of sealing member 122c will be better understood by a short digression to the manner of manufacture of, and industry standards on the manufacture of conventional bottles. In the making of bottles, a making apparatus comprises a plate member (not shown) for forming the seamless upper surface 124a (Figure 9) of bottle 124 and having a recess for receiving molding material and so forming the same. Further involved are two dies each configured to form respective seamed halves of the remainder of the bottle. As will be seen from inspection of any such conventional bottle, a seam commences at the ridge (R in Figure 12) below the seamless upper surface and continues down to the base of the bottle, thereacross, and upwardly to the ridge diametrically opposite the start of the seam.

An industry tolerance standard applies to the curvature of the exterior of the seamless surface, shown in Figure 9 as R1. The preferred embodiment takes such tolerance and curvature as a stepping point to enhanced sealing by configuring annular sealing surface 122c of closure 122 at a radius less than radius R1, shown as R2 in Figure 9. Preferably, applicants herein set radius R2 at approximately one-half of radius R1, as is seen in the enlarged partial view of Figure 9 and this gives rise to upper annular sealing surface loci 122c-1 and 122c-2, each in engagement with seamless upper surface 124a, when normal pressurization exists within bottle 124 as closed by closure 122 per the first or initial closure state.

In laboratory evaluation of the performance of closures of the invention, it is found that, as container pressure is increased, by control apparatus, from a datum level at initial closure, to a first greater level, the closure top panel is seen to bow convexly of the closure. The closure continues in a non-venting role at such first greater level, continuing sealing of the container. If now, the container pressure is controllably increased to a second level, greater than such first level, venting is observed, as by observing the container in a liquid bath, with air bubbles issuing from beneath the skirt of the closure. Such venting continues until container pressure diminishes to such first level or thereabouts, with venting then discontinuing.

It is believed that the increase to the first pressurization level causes the upper annular sealing surface locus 122c-1 to lift from the container seamless upper surface with increased sealing pressure thereupon existing at the lower annular sealing surface locus 122c-2 as a result of top panel bowing. Continued increase in container pressure to the second level is believed to give rise to a lift-off of the lower annular sealing surface locus and passage of air from the container through the flow passages 122d-1 in the bead 222 which would be formed by core recesses, resulting in lessening of container pressurization. The culmination of this sequence is believed to be the lift-off of both of the annular sealing surface loci and venting.

As the pressure decreases, the above events are believed to occur in reverse fashion to return the container to a pressure tolerable by the closure without venting.

Again by observations, in the course of initial opening of the container, as the skirt is displaced radially outwardly, the bead 222 escapes from the container depression and the annular sealing surface is opened, whereby air vents through the bead flow passages before advanced stages of container opening. By forming the flow passages only through a portion of the extent of the bead, structural integrity of the closure is maintained sufficiently for the foregoing events to occur without damage to the closure, which is, of course, reusable in subsequent closings and openings of the container.

While in the particularly illustrated preferred practice, the closure annular sealing surface is configured with a radius giving rise to upper and lower annular sealing surface loci, other configurations will be evident to those skilled in the art, given applicants' teaching herein.

A closure formed by the method of the invention could include a sealing member interiorly thereof, such as is indicated in preferred form at 22f in Figure 10 and the forming core in such a case would include a recess in its upper surface for the purpose of forming such sealing member. As illustrated, the sealing member 22f is in the form of a cone extending downwardly from top panel undersurface and having a radial flare increasing with its extent along the closure central axis A.

## Claims

1. A method for making a removeable container closure (210) having a planar top panel (212) and a cylindrical skirt (214) depending from the top panel (212) comprising the steps of:
(a) configuring a forming core (230) with an exterior surface defining a first interior surface of the closure (210) the first interior surface comprising a planar top panel undersurface and a cylindrical interior skirt wall (214), the core exterior surface including a first circumferential indentation for defining a bead (222) in the cylindrical interior skirt wall (214);
(b) encircling the core (230) with a stripper plate (232), the stripper plate (232) being configured to define a second interior surface of the closure (210) continuous with the first interior surface thereof and the second interior surface comprising (218) a inwardly facing surface at an open end (216) of the closure (210);
(c) configuring a molding housing to have an interior surface corresponding to the exterior surface of the closure and to be engageable with the stripper plate (232) and to be cooperative with the stripper plate (232) and the forming core (230) to define therewith a molding cavity for the closure (210);
(d) placing the stripper plate (232) and the molding housing in engagement, with the stripper plate (232) encircling the forming core (230), and injecting molding material into the molding cavity to form the closure (210) on the forming core (230);
(e) removing the molding housing from engagement with the stripper plate (232) to expose the formed closure for removal from the forming core (230) and
(f) displacing the stripper plate (232) axially relative to the forming core (230) and/or displacing the forming core (230) relative to the stripper plate (232);
wherein
the portion of the stripper plate (232) which defines the second interior surface of the closure (210) is at least in part tapered, whereby the second interior surface of the closure (210) is formed with a tapered portion,
a forming core (230) is used which has additional indentations which define locking tabs (220, 220a, 226) mutually spaced about the interior periphery of the closure (210) and extending radially inwardly of the skirt (214)
and the interaction between the stripper plate (232) and the closure (210) during relative motion between the stripper plate (232) and the forming core (230) results in an outward radial force on the closure (210) which causes the closure (210) to deform and release the bead (222) and the locking tabs (220, 220a,226) from the forming core indentations.

2. A method as claimed in Claim 1 wherein the first circumferential indentation of the forming core (230) used is located between the indentations which define the locking tabs (220, 220a, 226) and the portion of the exterior surface of the forming core (230) which defines the top panel (212) undersurface, the first circumferential indentation being coactive with the bead (222) formed therein to generate an outwardly radial force during displacement of the stripper plate (232) relative to the forming core (230) thereby assisting release of the locking tabs (220, 220a, 226) from the indentations which define them.

3. A method as claimed in any one of the preceding claims wherein the forming core (230) used has a second circumferential indentation spaced apart from the first circumferential indentation further away from the portion of the exterior surface of the forming core (230) which defines the top panel (212), the second indentation defining a hold-down ring (224).

4. A method as claimed in any one of the preceding claims wherein the forming core (230) used has a continuous surface which defines the whole of the interior surface of the planar top panel (212).

5. A method as claimed in any one of the preceding claims including the step of displacing the forming core (230) relative to the stripper plate (232) to strip the formed closure.

6. A method as claimed in any one of the preceding claims wherein a stripper plate (232) is used which has a conical portion defining the second interior surface of the closure (210) and the forming core (230) has a cylindrical portion located in a cylindrical bore in the stripper plate.

7. A method as claimed in claim 6 wherein a stripper plate (232) is used which encircles the forming core (230) and the conical surface of the stripper plate (232) is contiguous with the forming core exterior surface.

8. A method as claimed in any one of the preceding claims wherein a forming core is used which has an exterior surface which includes a portion for forming a sealing member (22f, 122c) integral with the closure.

9. A method as claimed in Claim 8 wherein a forming core is used which has an exterior surface which includes a conical recess at one end of the forming core whereby a conical sealing member (22f) is formed integral with the closure, which conical sealing member extends downwardly from the top panel flaring radially outwardly with increasing distance from the top panel.

10. A method as claimed in Claim 8 wherein a forming core is used which has an exterior surface which includes a recess at one end of the forming core whereby an annular surface of the closure is formed with a preselected radius of curvature as a sealing member (122c) which can act by forming two sealing loci when brought into abutment with a container surface.

11. Apparatus for use in a method as claimed in any one of the preceding claims comprising
a forming core (230) whose upper portion defines a first interior surface of a closure (210), the first interior surface consisting of a planar top panel undersurface (212), a cylindrical interior skirt wall (214) and a bead (222),
an upper molding housing whose interior surface defines the exterior surface of the closure (22),
a stripper plate (232) having an upper portion which defines a second interior surface of the closure, the second interior surface comprising a surface (218) at an open end (216) of the closure (210), and
means for causing relative motion between the stripper plate (232) and the forming core (230)
wherein
the upper portion of the stripper plate (232) which defines the second interior surface of the closure (210) is tapered, whereby the second interior surface of the closure (210) is formed correspondingly tapered,
the upper portion of the forming core (230) has recesses which define locking tabs (220, 220a, 226) mutually spaced apart about the interior periphery of the closure (210) and extending radially inwardly of the skirt (214),
and the interaction of the tapered stripper plate (232) and the closure (210) during relative axial motion between the stripper plate (232) and the forming core (230) results in an outward radial force on the closure (210) which causes the closure (210) to deform and release the bead (222) and the locking tabs (220, 220a, 226) from engagement with the forming core (230).

12. Apparatus as claimed in Claim 11 wherein the forming core (230) has a first circumferential indentation for defining a bead (222) located between the portion of the forming core which defines the top panel undersurface and the indentations which define the locking tabs (220, 220a, 226).

13. Apparatus as claimed in Claim 12 wherein the forming core has a second circumferential indentation spaced apart from the first circumferential indentation further away from the portion of the forming core which defines the top panel undersurface, the second indentation defining a hold-down ring (224).

14. Apparatus as claimed in Claims 11 to 13 wherein means are provided to move the forming core (230) relative to the stripper plate (232) to strip the formed closure from the forming core.

15. Apparatus as claimed in any one of Claims 11 to 14 wherein the upper portion of the stripper plate (232) is conical and defines a second interior surface of the closure (210) which comprises a cone which is increasingly outwardly radially flared along its length.

16. Apparatus as claimed in any one of Claims 11 to 15 wherein the upper portion of the forming core defines the first interior surface of the closure with an annular surface (22f,122c) spaced below the top panel undersurface.

## Patentansprüche

1. Verfahren zur Herstellung eines abnehmbaren Behälterverschlusses (210), der eine ebene Oberwand (212) und eine von der Oberwand (212) herabhängende zylindrische Schürze (214) aufweist, mit den Schritten:
a) Ausbilden eines Formkerns (230) mit einer Außenfläche, die eine erste Innenfläche des Verschlusses (210) definiert, wobei die erste Innenfläche eine Unterfläche der ebenen Oberwand und eine zylindrische Schürzeninnenwandung (214) umfaßt, wobei die Außenfläche des Kerns eine erste, umlaufende Vertiefung zum Definieren eines Wulstes (222) in der zylindrischen Schürzeninnenwandung (214) einschließt;
b) Einschließen des Kerns (230) mit einer Abstreifplatte (232), die so geformt ist, daß sie eine zweite Innenfläche des Verschlusses (210) definiert, die in dessen erste Innenfläche kontinuierlich übergeht, wobei die zweite Innenfläche eine nach innen gerichtete Oberfläche (218) an einem offenen Ende (216) des Verschlusses (210) aufweist;
c) Ausbilden eines Formgehäuses derart, daß seine Innenfläche der Außenfläche des Verschlusses entspricht und daß es von der Abstreifplatte (232) ergreifbar ist und daß es im Zusammenwirken mit der Abstreifplatte (232) und dem Formkern (230) eine Formkavität für den Verschluß (210) definiert;
d) Zusammenführen der Abstreifplatte (232) und des Aussengehäuses, wobei die Abstreifplatte (232) den Formkern (230) umgibt und Einspritzen von Formwerkstoff in die Formkavität zum Formen des Verschlusses (210) auf dem Formkern (230);
e) Abnehmen des Außengehäuses aus der Anlage an der Abstreifplatte (232) zum Freilegen des geformten Verschlusses für dessen Abnahme von dem Formkern (230), und
f) axiales Verschieben der Abstreifplatte (232) relativ zum Formkern (230) und/oder Verschieben des Formkerns (230) relativ zur Abstreifplatte (232),
wobei
der Teil der Abstreifplatte (232), der die zweite Innenfläche des Verschlusses (210) definiert, mindestens teilweise konisch verläuft, wodurch die zweite Innenfläche des Verschlusses (210) mit einem konischen Bereich geformt wird,
ein Formkern (230) verwendet wird, der zusätzliche Vertiefungen aufweist, die Riegelvorsprünge (220, 220a, 226) definieren, die in Abständen voneinander um den Innenumfang des Verschlusses (210) verteilt sind und von der Schürze (210) radial nach innen vorspringen, und wobei das Zusammenwirken zwischen der Abstreifplatte (232) und dem Verschluß (210) während der Relativbewegung zwischen der Abstreifplatte (232) und dem Formkern (230) eine nach außen gerichtete Radialkraft auf den Verschluß (210) ergibt, die eine Verformung des Verschlusses (210) und eine Freigabe des Wulstes (222) und der Riegelvorsprünge (220, 220a, 226) aus den Vertiefungen des Formkerns bewirkt.

2. Verfahren nach Anspruch 1,
bei dem die erste umlaufende Vertiefung des verwendeten Formkerns (230) zwischen den die Riegelvorsprünge (220, 220a, 226) definierenden Vertiefungen und dem Teil der Außenfläche des Formkerns (230) angeordnet ist, der die untere Fläche der Oberwand (212) definiert, wobei die erste umlaufende Vertiefung mit dem in ihr geformten Wulst (222) derart zusammenwirkt, daß sie bei der Verschiebung der Abstreifplatte (232) relativ zum Formkern (230) eine nach außen gerichtete Radialkraft erzeugt, die die Freigabe der Riegelvorsprünge (220, 220a, 226) aus den sie definierenden Vertiefungen unterstützt.

3. Verfahren nach einem der vorangehenden Ansprüche, bei dem der verwendete Formkern (230) eine zweite umlaufende Vertiefung aufweist, die im Abstand von der zweiten umlaufenden Vertiefung und weiter entfernt von dem die Oberwand (212) definierenden Abschnitt der Außenfläche des Formkerns (230) angeordnet ist, wobei die zweite Vertiefung einen Festhaltering (224) definiert.

4. Verfahren nach einem der vorangehenden Ansprüche, bei dem der verwendete Formkern (230) eine kontinuierliche Oberfläche hat, die die gesamte Innenfläche der ebenen Oberwand (212) definiert.

5. Verfahren nach einem der vorangehenden Ansprüche, mit dem Schritt des Verschiebens des Formkerns (230) relativ zur Abstreifplatte (232) zum Abstreifen des geformten Verschlusses.

6. Verfahren nach einem der vorangehenden Ansprüche, bei dem eine Abstreifplatte (232) verwendet wird, die einen konischen Abschnitt hat, der die zweite Innenfläche des Verschlusses (212) definiert, und wobei der Formkern (230) einen zylindrischen Abschnitt hat, der in einer zylindrischen Bohrung der Abstreifplatte angeordnet ist.

7. Verfahren nach Anspruch 6,
bei dem eine Abstreifplatte (232) verwendet wird, die den Formkern (230) umgibt und bei dem die konische Oberfläche der Abstreifplatte (232) an die Außenfläche des Formkerns bündig anschließt.

8. Verfahren nach einem der vorangehenden Ansprüche, bei dem ein Formkern verwendet wird, dessen Außenfläche einen Abschnitt zum Formen eines mit dem Verschluß einstückigen Dichtungselementes (122f, 122c) aufweist.

9. Verfahren nach Anspruch 8,
bei dem ein Formkern verwendet wird, dessen Außenfläche eine konische Vertiefung an einem Ende des Formkerns aufweist, durch die ein mit dem Verschluß einstückiges konisches Dichtungselement (22f) geformt wird, wobei das konische Dichtungselement sich von der Oberwand nach unten erstreckt und sich mit zunehmendem Abstand von der Oberwand radial nach außen erweitert.

10. Verfahren nach Anspruch 8,
bei dem ein Formkern verwendet wird, dessen Außenfläche eine Vertiefung an einem Ende des Formkerns aufweist, durch die eine als Dichtungselement (122c) dienende Ringfläche des Verschlusses mit vorgegebenem Krümmungsradius geformt wird, die beim Zusammenbringen mit einer Behälteroberfläche eine Dichtwirkung an zwei Dichtlinien ausüben kann.

11. Vorrichtung zur Verwendung in einem Verfahren nach einem der vorangehenden Ansprüche, mit
einem Formkern (230), dessen oberer Teil eine erste Innenfläche eines Verschlusses (210) definiert, wobei die erste Innenfläche aus einer Unterfläche (212), einer ebenen Oberwand, einer zylindrischen Schürzeninnenwandung (214) und einem Wulst (222) besteht,
ein oberes Formgehäuse, dessen Innenfläche die Außenfläche des Verschlusses (22) definiert,
einer Abstreifplatte (232) mit einem oberen Teil, der eine zweite Innenfläche des Verschlusses definiert, wobei die zweite Innenfläche eine Fläche (218) an einem offenen Ende (216) des Verschlusses (210) umfaßt, und
Mitteln zum Erzeugen einer Relativbewegung zwischen der Abstreifplatte (232) und dem Formkern (230),
wobei
der obere Abschnitt der Abstreifplatte (232) der die zweite Innenfläche des Verschlusses (210) definiert, konisch ist, wodurch die zweite Innenfläche des Verschlusses (210) entsprechend konisch geformt wird,
der obere Teil des Formkerns (230) Vertiefungen aufweist, die Riegelvorsprünge (220, 220a, 226) definieren, die in Abständen um den Innenumfang des Verschlusses (210) verteilt angeordnet sind und von der Schürze (214) radial nach innen vorspringen,
und wobei das Zusammenwirken der konischen Abstreifplatte (232) und des Verschlusses (210) während der relativen Axialbewegung zwischen der Abstreifplatte (232) und dem Formkern (230) zu einer nach außen gerichteten Radialkraft auf den Verschluß (210) führt, die eine Verformung des Verschlusses (210) und eine Freigabe des Wulstes (222) und der Riegelvorsprünge (220, 220a, 226) aus dem Eingriff mit dem Formkern (230) bewirkt.

12. Vorrichtung nach Anspruch 11,
bei der der Formkern (230) eine erste umlaufende Vertiefung zum Definieren eines Wulstes (222) aufweist, die zwischen dem die Unterfläche der Oberwandung definierenden Teil des Formkerns und den die Riegelvorsprünge (220, 220a, 226) definierenden Vertiefungen angeordnet ist.

13. Vorrichtung nach Anspruch 12,
bei der der Formkern eine zweite umlaufende Vertiefung aufweist, die im Abstand von der ersten umlaufenden Vertiefung und weiter entfernt von dem die Unterfläche der Oberwand definierenden Teil des Formkerns angeordnet ist, wobei die zweite Vertiefung einen Haltering (224) definiert.

14. Vorrichtung nach Anspruch 11 bis 13,
bei der Mittel vorgesehen sind zum Bewegen des Formkerns (230) relativ zur Abstreifplatte (232) zum Abstreifen des geformten Verschlusses von dem Formkern.

15. Vorrichtung nach einem der Ansprüche 11 bis 14,
bei der der obere Teil der Abstreifplatte (232) konisch ist und eine zweite Innenfläche des Verschlusses (210) definiert, die einen Konus aufweist, der sich über seine Länge zunehmend radial nach außen erweitert.

16. Vorrichtung nach einem der Ansprüche 11 bis 15,
bei dem der obere Teil des Formkerns eine erste Innenfläche des Verschlusses definiert mit einer Ringfläche (22f, 122c), die im Abstand unterhalb der Unterfläche der Oberwand angeordnet ist.

## Revendications

1. Procédé de fabrication d'une fermeture pour récipient amovible (210) comportant un pan supérieur plan (212) et une bordure cylindrique (214) pendant au pan supérieur (212) comprenant les phases consistant à :
(a) configurer un noyau de façonnage (230) avec une surface externe définissant une première surface interne de la fermeture (210), la première surface interne comprenant une surface inférieure de pan supérieur plan et une paroi de bordure interne cylindrique (214), la surface externe de noyau comprenant une première encoche circonférentielle pour former un bourrelet (222) dans la paroi de bordure interne cylindrique (214);
(b) entourer le noyau (230) d'une plaque d'extraction (232), la plaque d'extraction (232) étant configurée de manière à définir une seconde surface interne de la fermeture (210) en continu de sa première surface interne et la seconde surface interne comprenant une surface (218) donnant vers l'intérieur à une extrémité ouverte (216) de la fermeture (210);
(c) configurer un logement de moulage pour disposer d'une surface interne correspondant à la surface externe de la fermeture et pouvant être engagée avec la plaque d'extraction (232) et coopérer avec la plaque d'extraction (232) et le noyau de façonnage (230) afin de définir une cavité de moulage pour la fermeture (210);
(d) placer la plaque d'extraction (232) et le logement de moulage en engagement, avec la plaque d'extraction (232) entourant le noyau de façonnage (230), et injecter un matériau de moulage dans la cavité de moulage pour former la fermeture (210) sur le noyau de façonnage (230);
(e) supprimer l'engagement entre le logement de moulage et la plaque d'extraction (232) afin d'exposer la fermeture formée pour l'ôter du noyau de façonnage (230) et
(f) déplacer la plaque d'extraction (232) axialement par rapport au noyau de façonnage (230) et/ou déplacer le noyau de façonnage (230) relativement à la plaque d'extraction (232);
dans lequel
la portion de la plaque d'extraction (232) qui définit la seconde surface interne de la fermeture (210) est au moins partiellement conique, de sorte que la seconde surface interne de la fermeture (210) soit dotée d'une portion conique,
un noyau de façonnage (230) est utilisé qui comporte des encoches supplémentaires qui définissent des pattes de verrouillage (220, 220a, 226) espacées à la périphérie interne de la fermeture (210) et s'étendant radialement vers l'intérieur de la bordure (214)
et l'interaction entre la plaque d'extraction (232) et la fermeture (210) durant le mouvement relatif entre la plaque d'extraction (232) et le noyau de façonnage (230) produit une force radialement vers l'extérieur sur la fermeture (210) qui amène la fermeture (210) à se déformer et à dégager le bourrelet (222) et les pattes de verrouillage (220, 220a, 226) des encoches du noyau de façonnage.

2. Procédé selon la revendication 1, dans lequel la première encoche circonférentielle du noyau de façonnage (230) utilisé est située entre les encoches qui définissent les pattes de verrouillage (220, 220a, 226) et la portion de la surface externe du noyau de façonnage (230) qui définit la surface inférieure de part supérieur (212), la première encoche circonférentielle coopérant avec le bourrelet (222) formé en son sein pour produire une force radialement vers l'extérieur durant le déplacement de la plaque d'extraction (232) relativement au noyau de façonnage (230) afin de faciliter le dégagement des pattes de verrouillage (220, 220a, 226) des encoches qui les définissent.

3. Procédé selon l'une quelconque des revendications précédentes, dans lequel le noyau de façonnage (230) utilisé comporte une seconde encoche circonférentielle espacée de la première encoche circonférentielle encore plus loin de la portion de la surface externe du noyau de façonnage (230) qui définit le pan supérieur (212), la seconde encoche définissant une bague de retenue (224).

4. Procédé selon l'une quelconque des revendications précédentes, dans lequel le noyau de façonnage (230) utilisé comporte une surface continue qui définit la totalité de la surface interne du pan supérieur plan (212).

5. Procédé selon l'une quelconque des revendications précédentes, comprenant la phase consistant à déplacer le noyau de façonnage (230) relativement à la plaque d'extraction (232) pour extraire la fermeture formée.

6. Procédé selon l'une quelconque des revendications précédentes, dans lequel une plaque d'extraction (232) est utilisée qui comporte une portion conique définissant la seconde surface interne de la fermeture (210) et le noyau de façonnage (230) comporte une portion cylindrique située dans un alésage cylindrique dans la plaque d'extraction.

7. Procédé selon la revendication 6, dans lequel une plaque d'extraction (232) est utilisée qui entoure le noyau de façonnage (230) et la surface conique de la plaque d'extraction (232) est contiguë avec la surface externe du noyau de façonnage.

8. Procédé selon l'une quelconque des revendications précédentes, dans lequel un noyau de façonnage est utilisé qui comporte une surface externe qui comprend une portion pour former un organe d'étanchéité (22f, 122c) d'un seul tenant avec la fermeture.

9. Procédé selon la revendication 8, dans lequel un noyau de façonnage est utilisé qui comporte une surface externe qui comprend un évidement conique à une extrémité du noyau de façonnage de sorte qu'un organe d'étanchéité conique (22f) soit formé d'un seul tenant avec la fermeture, lequel organe d'étanchéité conique s'étend vers le bas depuis le part supérieur en s'évasant radialement vers l'extérieur au fur et à mesure qu'il s'éloigne du pan supérieur.

10. Procédé selon la revendication 8, dans lequel un noyau de façonnage est utilisé qui comporte une surface externe qui comprend un évidement à une extrémité du noyau de façonnage de sorte qu'une surface annulaire de la fermeture soit formée avec un rayon de courbure présélectionné en tant qu'organe d'étanchéité (122c) qui peut opérer par formation de deux sièges d'étanchéité lors de la butée avec une surface du récipient.

11. Appareil pour utilisation dans un procédé selon l'une quelconque des revendications précédentes, comprenant :
un noyau de façonnage (230) dont la portion supérieure définit une première surface interne d'une fermeture (210), la première surface interne consistant en une surface inférieure de pan supérieur plan (212), une paroi de bordure interne cylindrique (214) et un bourrelet (222),
un logement de moulage supérieur dont la surface interne définit la surface externe de la fermeture (22),
une plaque d'extraction (232) comportant une portion supérieure qui définit une seconde surface interne de la fermeture, la seconde surface interne comprenant une surface (218) à une extrémité ouverte (216) de la fermeture (210), et
des moyens pour entraîner un mouvement relatif entre la plaque d'extraction (232) et le noyau de façonnage (230)
dans lequel
la portion supérieure de la plaque d'extraction (232) qui définit la seconde surface interne de la fermeture (210) est conique, de sorte que la seconde surface interne de la fermeture (210) soit conique en correspondance,
la portion supérieure du noyau de façonnage (230) comporte des encoches qui définissent des pattes de verrouillage (220, 220a, 226) espacées à la périphérie interne de la fermeture (210) et s'étendant radialement vers l'intérieur de la bordure (214),
et l'interaction de la plaque d'extraction conique (232) et de la fermeture (210) durant le mouvement axial relatif entre la plaque d'extraction (232) et le noyau de façonnage (230) produit une force radialement vers l'extérieur sur la fermeture (210) qui amène la fermeture (210) à se déformer et à dégager le bourrelet (222) et les pattes de verrouillage (220, 220a, 226) du noyau de façonnage (230).

12. Appareil selon la revendication 11, dans lequel le noyau de façonnage (230) comporte une première encoche circonférentielle pour former un bourrelet (222) situé entre la portion du noyau de façonnage qui définit la surface inférieure de pan supérieur et les encoches qui définissent les pattes de verrouillage (220, 220a, 226).

13. Appareil selon la revendication 12, dans lequel le noyau de façonnage comporte une seconde encoche circonférentielle espacée de la première encoche circonférentielle encore plus loin de la portion du noyau de façonnage qui définit la surface inférieure de pan supérieur, la seconde encoche définissant une bague de retenue (224).

14. Appareil selon l'une quelconque des revendications 11 à 13 dans lequel des moyens sont prévus pour déplacer le noyau de façonnage (230) relativement à la plaque d'extraction (232) afin d'extraire la fermeture formée du noyau de façonnage.

15. Appareil selon l'une quelconque des revendications 11 à 14 dans lequel la portion supérieure de la plaque d'extraction (232) est conique et définit une seconde surface interne de la fermeture (210) qui comprend un cône qui s'évase de plus en plus radialement vers l'extérieur sur sa longueur.

16. Appareil selon l'une quelconque des revendications 11 à 15, dans lequel la portion supérieure du noyau de façonnage définit la première surface interne de la fermeture avec une surface annulaire (22f, 122c) espacée sous la surface inférieure de pan supérieur.
